# EUROPEAN PATENT SPECIFICATION

(11) **EP 0 386 097 B1**
(45) Date of publication and mention of the grant of the patent: **07.09.1994**
(21) Application number: 88910083.0
(22) Date of filing: 02.11.1988
(51) Int. Cl.: G01G 17/00, G01G 19/00, G01G 15/00, B65B 11/04

(54) **WEIGHING APPARATUS**
WÄGEAPPARAT
APPAREIL DE PESAGE

(30) Priority: 04.11.1987 GB 8725880
(43) Date of publication of application: 12.09.1990
(73) Proprietor: Keogh-Peters, Brian Gerrard Patrick, Royton Greater Manchester 0L2 5XG (GB)
(72) Inventor: Keogh-Peters, Brian Gerrard Patrick, Royton Greater Manchester 0L2 5XG (GB)
(74) Representative: Tunnicliffe, Peter Barry
(86) International application number: GB8800948
(87) International publication number: WO8904467

(56) References cited:
- EP-A- 0 086 045
- EP-A- 0 107 632
- EP-A- 0 174 618
- EP-A- 0 205 909
- US-A- 4 691 497

## Description

This invention relates to a new and improved weighing apparatus, and more particularly to an apparatus for enabling loads to be weighed while they are being moved, and especially when they are being wrapped or otherwise manipulated on a rotating moving platform.

There are a variety of methods available for weighing loads, but most of these are only satisfactory with static loads and are much less accurate when used with a moving load. This is especially so in the case of loads which are rotating, as the rotation causes the load to move outwards from the axis of rotation by centrifugal action and so alter the weight bearing upon the supporting platform, with the result that the rotating load not only tilts (and so can become unstable) but renders any conventionally fitted weighing device effectively useless.

An especially useful form of sensor or weighing device in current use is the transducer (often called a "load cell") which converts a force acting on it into an electrical output signal. Measurement of the electrical output signal from the transducer is readily converted into a measure of the force on the cell, and hence interpreted as the weight or load on it. These are usually used in the construction of weighing platforms, installed in or under them.

It is very desirable to combine a weighing operation with rotating operation, as for example in wrapping or packaging, but so far it has only been practicable to weigh as a separate operation from wrapping or any other rotating operation because the rotation produces forces which disturb the weighing operation if the load sensor is incorporated in the support platform itself. It is also very desirable to have apparatus which is also able to take into account the forces exerted upon the load by the wrapping operation itself, as for example the lateral forces which are exerted by a stretch-wrapping operation as the length of wrapping material is pulled tightly around the load and so tends to drag it sideways to some degree. These forces are very simi lar in their effect to centrifugal forces, as they tend to make the load tilt sideways, though they are generated as a result of the wrapping operation rather than the rotation of the load alone.

The nearest achievement hitherto has been to have the weighing platform adjacent to the rotating (e.g. packaging) apparatus, or as a part of the assembly but utilising a separate platform from that which is used to support the load during the rotating operation (especially packaging), and this is a great impediment to speedy and efficient operation.

We have now found that this difficulty can be overcome, so that both wrapping and weighing operations can be carried out on a common platform (i.e. one incorporating the sensor used for the weighing operation into the platform used to support the load during rotating operation) if the form of construction is such that the load-bearing platform is supported by a chassis in which vertical and lateral forces are decoupled. This allows the vertical forces to act on the sensor virtually unhindered, with little or no effect from lateral forces and so avoid the adverse effect of centrifugal forces.

In European Patent Application No. 0205909 (Valsesia) there is disclosed an apparatus which is described as an automatic weighing device, applied on wrapping machines with a rotary table for the cold- packing -- by means of a plastic film - of goods loaded on pallets. This device incorporates electronic load cells, sited to interrupt the normal mechanical connection between the machine frame and the rotary table on which goods are weighed.

This device as described is adapted for solving the problem, previously encountered, of having to wrap goods on one machine and then remove the loaded pallet on to a second machine in order to weigh it, thus requiring two machines. The Valsesia device does both tasks on one machine. However, the construction has been found in practice, in the form disclosed in the said specification, to be able to deal with these tasks only when the load is static -- i.e. to get a satisfactory read-out of the weight the operator needs to carry out the wrapping operation and then stop the machine in order to weigh the load. Otherwise, the rotation of the weighing table leads to severe fluctuations of the weight reading, and the device is not sufficiently effective to be able to weigh satisfactorily when the table and load are being rotated.

The present invention aims to overcome this disadvantage and provide a modified form of apparatus which can give satisfactory weight reading while the weighingtable is being rotated.

This according to the present invention there is provided an improved apparatus of claim 1, useful for weighing a load while it is subject to lateral forces, which comprises three main sections:-
(1) a static base member, (2) a floating member, and
(3) a load-bearing member to carry the load to be weighed, constructed so that the static base member
(1) provides a firm base on a substrate surface, and the floating member (2) is supported by the static base member (1) through an interface incorporating a transducer and itself supports the load-bearing member (3) through an interface adapted to dissipate or reduce lateral forces acting on the load-bearing member or a load carried upon it.

The static base member (1) may be fixed or transportable, and may lie upon the ground or be inset into it, as desired.

Conveniently, the interface between the members (1) and (2) may comprise one or more transducers interposed between the members (1) and (2), disposed so that each transducer is supported upon the member (1) and carries the member (2) upon it in the manner necessary to actuate the transducer.

Most commonly, this arrangement will put the transducer in compression as it is in the compression mode that most transducers function, but if desired the arrangement may be adapted to put the transducer in tension or torsion at the interface if the transducer is one which operates in the tension or torsion mode.

The interface between the members (2) and (3) may conveniently comprise one or more means supported upon or bui It into the member (2) so as to allow the member (3) to move sideways across it without detracting significantly from the downward force it exerts upon the member (2).

A form of this interface, which is preferred because it is very convenient for construction and also enhances the accuracy and steadiness of weight readings, comprises a series of cup bearings, which are a form of ball-bearing in which the ball is carried in a cup and a load can then bear down directly on the ball and easily slide laterally across it. The interface is a series of individual bearings, each supported or carried on its own individual member attached to the main base of the floating member (2), for example by way of a pillar or upright elongated member. This has the advantage of reducing weight and also reducing the disturbing vibrations which tend to cause the most adverse effects encountered by the transducers or load cells. If desired, the bearings may be combined, for example in the form of a ball race, but it is much preferred that this should be kept as lightweight in construction as possible, and that any massive construction is avoided.

A most important embodiment is that in which the load is being rotated for purposes of wrapping or packaging it, and the load-bearing member (3) is a load-bearing turntable.

In this embodiment, the apparatus according to the invention comprises:-(1) a static base member, (2) a floating member, and (3) a load-bearing turntable to carry the load to be weighed, constructed so that the static base member (1) provides a firm base on a substrate surface, and the floating member (2) is supported by static base member (1) through an interface incorporating a transducer and itself supports the load-bearing turntable (3) through an interface adapted to dissipate or reduce lateral forces acting on the load-bearing turntable or a load carried upon it.

The preferred means for dissipating or reducing the lateral forces exerted on or by the turntable may comprise cup bearings, fitted to the upperfaces of the floating member (2) so as to provide a bearing surface on which the load-bearing turntable (3) rests and can rotate freely.

The load-bearing turntable (3) is most conveniently made circular in shape, and may be either freely supported or may be surrounded by a protective skirt. If desired, it may be inset into a well in another static flat surface, for example to assist access or to protect the mechanism.

The static base member (1) and the floating member (2) may conveniently be regarded as together comprising a form of chassis upon which the load-bearing turntable (3) is carried.

These members (1) and (2) may be constructed in a variety of forms, according to conventional engineering practice, but is it preferred that one or both of them is made from a series of rib and/or strut components, connected together by welding or other means, so as to provide structures which combine good strength and resistance to unwanted distortion with low weight -- all of which lead to greater ease of use and help to dissipate or reduce the rotational energy and vibration which can tend to build up and interfere with the transducers and the weighing. Such components may be of any form or materials providing the desired strength, for example they may be of angular, box, channel or ribbed cross-section, and are preferably made of metal.

Especially, one or both of members (1) and (2) may be made in the form of a ribbed network, reminiscent of a spider's web. This may be of polygonal form, for example (and very conveniently) a hexagonal arrangement, to assist in providing an appropriate number of points around their perimeters atwhich the transducers may be placed -- preferably substantially symmetrically and/or equidistantly. Such arrangements are conveniently referred to as "spiders." The hexagonal form is very convenient, but the invention is not restricted solely to this format.

Such a construction may comprise a series of components connecting a series of points around the periphery of the member [(1) and/or (2), as the case may be], together with a further series of components radially disposed and connecting the points on the periphery of the member to a central point.

A convenient form, for example, comprises a members (1) and (2) as hexagonal frames, with three transducers placed out equidistantly at alternate apex points round the perimeter.

The shape and joining of the components of members (1) and (2) should be in a manner which minimises the risk of any undue torsional or flexural weaknesses, stresses or instability (i.e. be "stress- corrected"). This assists in achieving satisfactory adjustment of the apparatus to give sensitive and accurate weight readings. The transducers may be connected between the members (1) and (2) in conventional manner so that weight on the floating member (2) actuates them.

The load-measuring devices or transducers may be any of those known in the art, and especially those known as load cells. These are devices which convert an applied force unto an electrical output signal, which in turn can be converted by electronic circuitry into a form suitable for a registering device which either indicates or records the force on the cell in terms of the weight of the load. Such devices in themselves are well known, and are not provided as the present invention.

The number of such devices may vary, but usually one is not sufficient and several should be used, distributed about the area on which the load is placed, and the output signals from all of these is combined in a way which measures the total load. This enables the platform to cope with loads which are irregular in shape and makes the precise positioning of the load on the platform less critical -- a consideration which is most important in any commercial operation.

The number of transducers may be chosen to suit the user's requirements, either as to the desired accuracy of the weighing operation or for ease and economy of construction. Although one might suffice, and two is the practicable minimum, it is desirable that at least three should be used and the use of at least four is preferred. This use of multiple sensing devices and the combining of their outputs to measure the weight of the load also is not a feature provided as the present invention.

The transducers may then be conveniently placed at points at which the members (1) and (2) coincide (i.e. where one overlies the other), especially at points at which the "arms" of one "spider" network meet those of the other. This "spider form" has the great advantage of saving weight, which is most important for economy and also for greater portabi lity of the apparatus. It also greatly improves the resistance of the assembly to vibrations which adversely affect the transducers or load cells, possibly because the amount and disposition of metal around each trabs- ducer and in the structure as a whole is better able to dissipate the rotational energy or vibrations generated, or at least is able to divert these into frequencies which are less likely to disturb the signals sent out by the transducers or be more readily tolerated by the transducers.

Likewise, the number and arrangement of the means supported upon or built into member (2) so as to allow the load-bearing turntable (3) to rotate over it without detracting significantly from the downward force it exerts upon member (2) (as, for example, when cup bearings are used) may be similar to those for the positioning of the interfaces incorporating transducers. It is not necessary for the number or the positions of these to be the same, however. For example, when using three transducers or load cells, it is very convenient to use six bearings, which allows a pair to be disposed (one on each side) of each transducer.

The interface between the static member (1) and the floating member (2) is preferably constructed as a form of unit (conveniently referred to as a "housing") which serves to locate the transducer and provide it with a degree of protection against possible damage or displacement which could adversely affect its weighing efficiency. This "housing" or interface may be made by arranging that protruding sections orcav- ities in the members (1) and (2) coincide to form the desired configuration. One simple way for doing this is to contruct the members (1) and (2) with "L"-shaped sections which, by close juxtapositioning, enclose (wholly or partly) a space in which a tranducer can be sited.

It is greatly preferred to arrange that means are provided for limiting the degree of movement of floating member (1), because excessive movement of it can sometime damage the transducer, for example by damaging or removing the protective "cap" often provided on conventional transducers or "load cells" as available commercially. This can be achieved very neatly by making the "housing" described above with a carefully defined gap between neighbouring points of its two opposing sections. The main function of the gap is to provide a means for limiting the degree or range of movement between the two sections, so that contact between the two sections can occur when an excessive weight is placed upon the turntable and thereby limit the extent to which further forces can then act upon the transducer within the housing. This protects the transducer from overloads which could damage it. Normally, the working capacity of the transducer can be safely and adequately matched with the anticipated loads to be encountered during use, but it is very desirable to have such a "fail safe" measure to improve the reliability of the apparatus in use, when it may receive rough or careless handling.

Before the safe working limit of the transducer is reached, the contact between the sections intervenes to limit the pressure or forces applied and to prevent overload and consequent damage.

A convenient gap size is of the order of 20 to 30 mm, but the optimum in any particular instance will usually be determined by the characteristics of the particular transducer used.

To improve the stability of the apparatus, and especially to stabilise the weight readings given by the transducers, it is preferred to reinforce the housing (especially one formed from two adjacent "L-shaped" sections as described above) to avoid flexing of the housing itself. This is conveniently done by attaching reinforcing gussets or backing plates at the angle of the housing, transversely to the main sides (e.g. of the "L-shaped" sections). This reduces any tendency for the weight indication to fluctuate or be unsteady, as for example on a digital read-out instrument.

Rotation of the load-bearing turntable can be obtained by driving it, through a central vertical spindle or driving shaft, from a convenient motor or other power source. One preferred power source is a vehicle, from which power can be drawn.

This can be done, by way of the vehicle wheels, in the manner described more fully in our European Patent Application No. 83300248.8 (EP-A2,3-86 045).

In construction, it is clearly necessary to allow the drive for rotation of the load-bearing turntable (3) to operate without impeding operation of the transducers. The preferred form of construction for achieving this is to attach the motor drive (directly or through a gearbox) and arrange that the whole is suspended so that the power input (for example the motor and/or gearbox) remains clear of the ground or any other obstruction (including the static base member (1)) even when the turntable is under load.

The most advantageous construction, therefore, is that in which the the power input for rotating the load-bearing turntable is attached to the floating member (2). This avoids the problems associated with the conventional method of attaching the motor or power input to the base member (1), and greatly reduces the problems of minimising or isolating undesirable vibrations and disturbance.

For this, the power input may be a motor, for example an electric or hydraulic motor, or it may be a gearbox or other means whereby power can be fed in to rotate the load-bearing turntable. The drive to the turntable may be through a flexible or jointed drive, which allows the turntable to rise and fall under load without causing the drive to falter or jam.

The invention allows for considerable versatility in the methods which can be used to drive the load-bearing turntable. A flexible or hydraulic drive allows a main motor to be sited separately at any convenient position near the apparatus, so that the weight of the apparatus itself may be reduced. If a motor (for example an electric motor) is used, it can be attached securely to the floating member (2) and positioned to best advantage on it, for example close to the central point of the "spider" described above. This attachment to the floating member avoids the problems of coping with relative movements of the two members (1) and (2) under load and use.

The drive may be a variable one, for example by way of a drive shaft attached to member (2), which drives a wheel (preferably shod with rubber or other resilient and gripping material, for example a tyre) so that its rim presses on the underside of the load-bearing turntable and, by its rotation, rotates the turntable. The speed of rotation of the turntable can be varied, for a given speed of the said driving wheel, by movement of the said wheel to engage the underside of the turntable at different distances from its centre of rotation, thus altering the effctive drive ratio and the rotational speed of the turntable.

The load-bearing turntable (3) may be most conveniently made with a central spindle, about which rotation occurs, adapted to fit into a matching recess in the upper surface of the floating member (2), adjacent to or part of the power input unit. This serves to locate the turntable, and also -- by slotting or keying in -- as a means for transmitting desired rotational forces. Alternatively, the spindle may made to fit into a recess on the underside of the turntable.

The invention is illustrated but not limited by description of a very convenient form of overall assembly of the preferred form of the invention as comprising one hexagonal frame with bracing struts from each corner to its centre, which serves as a static base member (1), on which is mounted a second similar hexagonal frame with bracing struts from each corner to its centre, which serves as a floating member (2). The two frames or "spiders"are connected together by way of three load cells at alternate corners of the hexagons, and an electric or hydraulic motor (or other power input device) is secured firmly to the upper face of the upper heaxgonal frame (2). In the upper face of the upper hexagonal frame (2) is a vertical tubular recess adapted to receive a spindle. On top of the upper hexagonal frames are six cup bearings, each on top of a pi liar securely attached at or near the six corners of the hexagon. On top of the pair of frames is positioned a round, flat turntable disc with a spindle projecting downwards from its centre, and fitting into the recess in the top of the upper (floating) frame (2) so that it engages with the drive of the motor or power input. The load cells are connected to an electronic unit which collates their output signals and processes them to present them on a reader or recorder device as a measure of the weight of the load on the turntable.

The rate of rotation of the load-bearing turntable can vary, but can easily be of the order of 20 revolutions per minute without difficulty.

An advantage of the present invention, especially when applied to the wrapping or packaging of a load, is that it enables the user to enjoy many additional useful facilities which cannot be achieved in the conventional systems in which the weighing must be conducted as a separate step from wrapping or packaging. This enables the user to employ many of the devices and ancillary items of equipment available on the market, but to to use them in more advantageous ways.

For example, as the weighing operation can be carried outwhile the wrapping or packaging operation is in progress, it now becomes possible to record the weight of the package and imprint the information concerning its weight on the package itself, within the protection of the wrapping material (i.e. this can be made as an integral part of the package). Hitherto, it has not been possible to do this, and weights have had to be estimated or recorded by labels or markings which have to be superimposed on the final wrappings -- and so be exposed to all the risks of removal or defacement, as well as requiring a time-consuming multi-stage procedure. The present invention also allows information concerning one or more of the components of the package to be taken into account and quickly absorbed so that it can be included in such an integral marking system, as for example by first measuring the tare (empty) weight of a container and then is laden weight, and hence its net (contents) weight. Similarly, it can facilitate the identification of any abnormal weight which may occur during wrapping - for example through some of the load being accidentally lost before packaging is completed -- or for ensuring that the load has a weight complying with desired limits (e.g. that it is neither over nor under the limits of some set specification). It allows also the possibility of making up a load and taking account of information derivable from the weight, for example to count the number of units in a package, either just to ascertain the number or to control it.

Conventional methods and devices may be used, for example bar codes, bar code readers and printers, and associated labelling and recording devices.

The invention may be used in conjunction with any known wrapping and/or packaging method for example using film, strip, sheet, net or filamentary forms of wrapping material, which may be made of any conventional material but especially of plastic material. Suitable wrapping materials include metallic materials (for example wires, strapping, and the like), but plastic materials are more commonly used. These may be especially those known as "stretch-wrap" materials, which can readily adapt themselves to irregular contours of a package and bind the package strongly together.

In our European Patent Application No. 83300248.8 (Publication No. 0086045) there is described a packaging or wrapping assembly in which a vehicle, especially a fork-lift truck, is used as a power source for the packaging operation, and the packaging equipment can be made in a transportable form. This invention extends the usefulness of known packaging and wrapping methods and apparatus, by making them more versatile. The methods and apparatus of the present invention are especially advantageous when used in conjunction with the invention described in the specification of this European Patent Application, as the operator of the packaging machinery -- in this case, the driver of the forklift truck or the like used to power the packaging operation -- can have all the required operations under his own control and within easy reach simultaneously.

For example the operator of the forklift truck can regulate the packaging operation and, without having to leave the vehicle, use (for example by reaching out by hand, or by means of a device attached to the vehicle) an adjacent weight-recording device to obtain a printed record of the package weight (together with any other other relevant information) and insert this into the package before completing wrapping, so enabling the the information to be incorporating into the package with minimum delay and maximum protection. Likewise, he can use such devices as bar-code readers to read data from the components of the load or from other sources to feed it into ancillary equipment and, if desired, back into the package being wrapped.

If desired, information concerning the weight can be taken from the transducers and and transmitted to a receiving point at which the data may be recorded, processed, re-transmitted, etc., as required. Transmission may be my any conventional means, for example by wires, radio, infra-red, sonic or other means, or any combination of these, as desired or convenient.

## Claims

1. A weighing apparatus, useful for weighing a load while it is subject to lateral forces, which comprises a static base member upon which a floating member is supported through an interface incorporating a load-indicating transducer, and a load-bearing member supported upon the said floating member, wherein the load-bearing member is supported on the floating member through an interface adapted to dissipate or reduce lateral forces acting on the load-bearing member or a load carried upon it, CHARACTERISED IN THAT the said interface between the load-bearing member and the floating member comprises' a series of cup-bearings carried upon upright members attached to the floating member.

2. A weighing apparatus as claimed in Claim 1 wherein the cup-bearings are fitted to the upper faces of the floating member.

3. A weighing apparatus as claimed in Claim 1 or Claim 2 wherein the load-bearing member is a rotatable turntable.

4. A weighing apparatus as claimed in any of Claims 1 to 3 wherein three or more transducers are used, and their outputs are combined to produce a measure of the weight of the load.

5. A weighing apparatus as claimed in any of Claims 1 to 4 wherein the power input to rotate the load-bearing turntable is mounted on the floating member.

6. A weighing apparatus as claimed in any of Claims 1 to 5 wherein construction of the static member and/or the floating member is in the form of a light-weight ribbed network.

7. A weighing apparatus as claimed in Claim 6 wherein the lightweight ribbed network is polygonal in shape.

8. A weighing apparatus as claimed in any of Claims 1 to 7 wherein the interface between the static member and the floating member is constructed to form a housing which serves to locate the transducer and provide protection against damage or displacement.

9. A weighing apparatus as claimed in any of Claims 1 to 8 wherein there are provided means for limiting the degree of movement of the floating member, to protect the transducer from excessive forces, for example by a defined gap in the housing.

10. A weighing apparatus as claimed in Claim 9 wherein the housing is constructed to avoid flexing of the housing itself.

## Patentansprüche

1. Eine Wiegevorrichtung, die zum Wiegen einer Last nützlich ist, während diese Seitenkräften ausgesetzt ist, bestehend aus einem statischen Grundteil, auf dem ein gleitendes Konstruktionsteil durch eine Schnittstelle mit einem lastanzeigenden Meßwertwandler gestützt wird, und ein lasttragendes Konstruktionsteil auf dem genannten gleitenden Konstruktionsteil, worin das lasttragende Konstruktionsteil auf dem gleitenden Konstruktionsteil durch eine Schnittstelle gestützt wird, die geeignet ist, Seitenkräfte, die auf das lasttragende Konstruktionsteil odereine darauf getragene Last einwirken, zu dissipieren oder zu reduzieren, dadurch gekennzeichnet, daß die genannte Schnittstelle zwischen dem lasttragenden Konstruktionsteil und dem gleitenden Konstruktionsteil aus einer Serie Konuskugellager auf aufrechten Konstruktionsteilen besteht, die am gleitenden Konstruktionsteil angebracht sind.

2. Eine Wiegevorrichtung gemäß Anspruch 1, worin die Konuskugellager an den Oberseiten des gleitenden Konstruktionsteils angebracht sind.

3. Eine Wiegevorrichtung gemäß Anspruch 1 oder Anspruch 2, worin das lasttragende Konstruktionsteil eine drehbare, schwenkbare Plattform ist.

4. Eine Wiegevorrichtung gemäß irgendeinem der Ansprüche 1 bis 3, worin drei oder mehr Meßwertwandler verwendet werden und ihre Ausgabedaten vereinigt werden, um eine Messung des Gewichts der Ladung zu ergeben.

5. Eine Wiegevorrichtung gemäß irgendeinem der Ansprüche 1 bis 4, worin die zugeführte Leistung zum Drehen der lasttragenden, schwenkbaren Plattform auf dem gleitenden Konstruktionsteil montiert ist.

6. Eine Wiegevorrichtung gemäß irgendeinem der Ansprüche 1 bis 5, worin die Konstruktion des statischen Konstruktionsteils bzw. des gleitenden Konstruktionsteils die Form eines leichten, gerippten Netzes hat.

7. Eine Wiegevorrichtung gemäßAnspruch 6, worin das leichte, gerippte Netz eine polygonale Form hat.

8. Eine Wiegevorrichtung gemäß irgendeinem der Ansprüche 1 bis 7, worin die Schnittstelle zwischen dem statischen Konstruktionsteil und dem gleitenden Konstruktionsteil so konstruiert ist, daß sie ein Gehäuse bildet, das dazu dient, den Meßwertgeber zu positionieren und Schutz vor Beschädigung oder Verschiebung zu gewähren.

9. Eine Wiegevorrichtung gemäß irgendeinem der Ansprüche 1 bis 8, worin Einrichtungen vorgesehen sind, um den Bewegungsgrad des gleitenden Konstruktionstei Is zu beschränken, um den Meßwertgeber beispielsweise durch einen festgelegten Spalt im Gehäuse vor übermäßigen Kräften zu schützen.

10. Eine Wiegevorrichtung gemäßAnspruch 9, worin das Gehäuse so konstruiert ist, daß es eine Durchbiegung des Gehäuses selbst vermeidet.

## Revendications

1. Appareil à peser, utile pour le pesage d'une charge alors qu'elle est soumise à des forces latérales, comprenant un élément de base statique sur lequel est supporté un élément flotteur par l'intermédiaire d'une interface incorporant un transducteur indicateur de charge, et un élément porteur de charge supporté sur l'élément flottant, l'élément porteur de charge étant supporté sur l'élément flottant par l'intermédiaire d'une interface agencée de manière à dissiper ou réduire les forces latérales agissant sur l'élément porteur de charge ou une charge portée par celui-ci, caractérisé en ce que l'interface entre l'élément porteur de charge et l'élément flottant comporte une série de paliers à coupelle portés sur des éléments verticaux fixés à l'élément flottant.

2. Appareil à peser selon la revendication 1 dans lequel les paliers à coupelle sont ajustés aux surfaces supérieures de l'élément flottant.

3. Appareil à à peser selon la revendication 1 ou la revendication 2 dans lequel l'élément porteur de charge est un plateau tournant.

4. Appareil à peser selon l'une quelconque des revendications 1 à 3 dans lequel trois transducteurs ou davantage sont utilisés, et leurs sorties sont combinées pour produire une mesure du poids de la charge.

5. Appareil à peser selon l'une quelconque des revendications 1 à 4 dans lequel l'alimentation d'énergie pour l'entraînement en rotation du plateau tournant porteur de charge est montée sur l'élément flottant.

6. Appareil à peser selon l'une quelconque des revendications 1 à 5 dans lequel l'élément statique et/ou l'élément flottant est réalisé sous forme de réseau nervuré léger.

7. Appareil à peserselon la revendication 6 dans lequel le réseau nervuré léger est de forme polygonale.

8. Appareil à peser selon l'une quelconque des revendications 1 à 7 dans lequel l'interface entre l'élément statique et l'élément flottant est réalisé sous forme d'un logement servant à localiser le transducteur et à fournir une protection contre les dommages ou les déplacements.

9. Appareil à peser selon l'une quelconque des revendications 1 à 8 dans lequel sont prévus des moyens pour limiter l'amplitude du mouvement de l'élément flottant, afin de protéger le transducteur de forces excessives, par exemple par une ouverture de forme déterminée dans le logement.

10. Appareil à peser selon la revendication 9 dans lequel le logement est réalisé de manière à éviter la flexion du logement lui-même.
